# EUROPÄISCHE PATENTSCHRIFT

(11) **EP 4 409 367 B1**
(45) Veröffentlichungstag und Bekanntmachung des Hinweises auf die Patenterteilung: **19.08.2026**
(21) Anmeldenummer: 22786818.9
(22) Anmeldetag: 28.09.2022
(51) Int. Cl.: G05B 17/02

(54) **VERFAHREN UND SIMULATOR FÜR DEN TEST MINDESTENS EINES STEUERGERÄTS**
METHOD AND SIMULATOR FOR TESTING AT LEAST ONE CONTROL UNIT
PROCÉDURE ET SIMULATEUR POUR LE TEST D'AU MOINS UNE UNITÉ DE CONTRÔLE

(30) Priorität: 30.09.2021 DE 102021125399
(43) Veröffentlichungstag der Anmeldung: 07.08.2024
(73) Patentinhaber: dSPACE SE & Co. KG, 33102 Paderborn (DE)
(72) Erfinder: MÜHLENHOFF, Christoph, 33102 Paderborn (DE)
(86) Internationale Anmeldenummer: PCT/EP2022/076973
(87) Internationale Veröffentlichungsnummer: WO 2023/052416

(56) Entgegenhaltungen:
- WO-A1-2020/165067
- US-A1- 2017 220 712

## Beschreibung

Die Erfindung betrifft ein Verfahren für den Test mindestens eines Steuergeräts, wobei auf einem Simulator, insbesondere auf einem Hardware-in-the-Loop (HIL) -System mit mindestens einer Recheneinheit, bevorzugt einer Echtzeit-Recheneinheit, oder auf einer Software-in-the-Loop (SIL)-Simulationsplattform, mindestens zwei getrennte Netzwerke vorgehalten sind, wobei das zu testende Steuergerät mit dem Simulator über ein erstes Netzwerk und eine erste Steuergeräte-Schnittstelle, z.B. über eine Ethernet-Schnittstelle, verbunden ist oder in dem Simulator als Teilnehmer des ersten Netzwerks emuliert wird. Im letzteren Fall liegt das zu testende Steuergerät als sogenanntes virtuelles Steuergerät vor. Als virtuelles Steuergerät bezeichnet man rein in Software vorliegende Steuergeräte, die aber bereits den Seriencode für das reale Steuergerät aufweisen und von denen es unterschiedliche Ausbaustufen gibt (https://www.dspace.com/de/gmb/home/news/engineers-insights/blog-virtuals-ecus-1808.cfm#175_43575 ). In diesem Dokument sind mit dem Begriff "Steuergerät" sowohl reale als auch virtuelle Steuergeräte gemeint, es sei denn, es wird explizit unterschieden. Mit Bezugnahme auf virtuelle Steuergeräte wird hier i.d.R. von "Emulieren" statt von "Simulieren" gesprochen, um die Simulation der virtuellen Steuergeräte von der ebenfalls beschriebenen Simulation der reinen Kommunikationsanteile von Steuergeräten zu unterscheiden. In diesem Dokument werden als "simulierte Steuergeräte" nur Software-Module bezeichnet, die lediglich die Kommunikationsanteile von Steuergeräten simulieren.

Das zu testende Steuergerät ist dafür vorgesehen, mit mindestens einem ersten weiteren Steuergerät zu kommunizieren, wobei die Kommunikation des ersten weiteren Steuergeräts zumindest teilweise in Form von aufgezeichneten Nachrichten vorliegt, wobei mittels mindestens einer Wiedergabe-Schnittstelle (z.B. einer weiteren Ethernet-Schnittstelle) eine Wiedergabe-Einheit zum Abspielen der aufgezeichneten Nachrichten mit dem zweiten Netzwerk oder einem dritten Netzwerk auf dem Simulator verbunden ist, wobei die Wiedergabe-Einheit beispielsweise als separate Vorrichtung - etwa in Form eines geeigneten Rechners mit einem Programm zur Wiedergabe von aufgezeichneten Nachrichten wie z.B. das Programm RTMaps^{™} der Firma Intempora - über die Wiedergabe-Schnittstelle an den Simulator angeschlossen ist. Es kann sich hierbei aber auch um eine interne Wiedergabe-Einheit zur Ausführung des Programms zur Wiedergabe von aufgezeichneten Nachrichten und eine interne Wiedergabe-Schnittstelle im Simulator handeln oder um eine in Software ausgebildete Schnittstelle zwischen der Wiedergabe-Einheit und dem Simulator bzw. der Simulationsplattform. Auf dem Simulator ist eine Queue für in dem zweiten und/oder dem dritten Netzwerk empfangene Nachrichten vorgehalten und zumindest Teile der Kommunikation des zu testenden Steuergeräts mit mindestens dem ersten weiteren Steuergerät werden mittels eines auf dem Simulator vorgehaltenen und auf der mindestens einen Recheneinheit des Simulators ausgeführten Simulationsmodells simuliert, wobei im zweiten Netzwerk mittels eines ersten Software-Moduls des Simulationsmodells mindestens Teile der Kommunikation des zu testenden Steuergeräts simuliert werden und wobei auf dem Simulator in dem ersten Netzwerk die mit dem zu testenden Steuergerät kommunizierenden weiteren Steuergeräte als Kommunikationspartner für das zu testende Steuergerät mittels mindestens eines weiteren Software-Moduls des Simulationsmodells simuliert werden.

Die Erfindung betrifft auch einen Simulator zur Durchführung des erfindungsgemäßen Verfahrens.

Ein ähnliches Verfahren für den Test von Steuergeräten mittels eines Simulators wird in der deutschen Patentanmeldung mit der Anmeldenummer 102020134185.7 beschrieben, wobei ein HIL-Simulator zwischen das zu testende Steuergerät und weitere Steuergeräte geschaltet wird und der HIL-Simulator die Nachrichten, die er von den weiteren Steuergeräten erhält, an das zu testende Steuergerät weiterleitet. Auch dort sind auf dem HIL-Simulator getrennte Netzwerke vorgehalten, wobei jeweils für die angeschlossenen Steuergeräte eines Netzwerks die Kommunikation der an dem anderen Netzwerk angeschlossenen Kommunikationspartner simuliert wird.

Eine Wiedergabe-Einheit für das Speichern und Abspielen aufgenommener Nachrichten ist beispielsweise in der WO2020165067 beschrieben. Bei der Wiedergabe-Einheit kann es sich beispielsweise um ein Gerät zum Aufnehmen und Abspielen von Nachrichten in einem Fahrzeugnetzwerk handeln, wie es von der Firma dSPACE GmbH angeboten wird (https://www.dspace.com/de/gmb/home/products/hw/autera.cfm), eine Wiedergabe-Einheit kann aber auch in einem Simulator integriert sein.

Generell ist in der US 2017/0220712 A1 ein Verfahren beschrieben, um für den Test eines realen oder auch virtuellen Steuergeräts die weiteren Steuergeräte, die für den Test nicht physikalisch vorliegen, in möglichst einfacher Weise zu simulieren. Dazu werden diese sogenannten Restbus-Steuergeräte in einem einzigen gemeinsamen Restbus-Steuergeräte-Modell zusammengefasst und es werden gemeinsame Schnittstellen generiert.

Aufgabe der Erfindung ist es, den Stand der Technik weiterzubilden.

Die Aufgabe wird dadurch gelöst, dass die Wiedergabe der aufgezeichneten und von der Wiedergabe-Einheit über die Wiedergabe-Schnittstelle an den Simulator (z.B. auch über die interne Wiedergabe-Schnittstelle im Simulator an die Recheneinheit des Simulators) übertragenen Nachrichten mittels eines auf dem Simulator vorgehaltenen Wiedergabe-Codes gesteuert wird, wobei ein Befehl zum Starten der Wiedergabe bewirkt, dass die aufgezeichneten Nachrichten, die der Simulator von der Wiedergabe-Einheit empfängt, in die Queue aufgenommen und von dort in einen Nachrichten-Puffer geschrieben werden, um auf einen Trigger-Befehl aus dem Simulationsmodell an das zu testende Steuergerät übergeben zu werden. Mit Simulationsmodell ist hier das auf dem Simulator ausgeführte Programm gemeint, welches die für den Test des zu testenden Steuergerätes benötigten zeitlichen Abläufe, Nachrichten, Signale und/oder Ereignisse simuliert oder deren Weitergabe anstößt.

Der Vorteil der erfindungsgemäßen Lösung besteht darin, dass die Nachrichten aus der Wiedergabe-Einheit im Simulator (bevorzugt gegeben durch einen HIL-Simulator oder auch einen geeigneten PC oder eine PC- oder Cloud-basierte SIL-Simulationsplattform wie etwa VEOS^{®} der Firma dSPACE) in einem separaten Netzwerk, nämlich dem zweiten oder dem dritten Netzwerk empfangen werden, welches von dem ersten Netzwerk, an welches das zu testende Steuergerät angeschlossen ist, getrennt ist. Mit Netzwerk ist hier gemeint, dass die in dem jeweiligen Netzwerk vorgehaltenen Kommunikationsteilnehmer (echte, virtuelle und lediglich in Kommunikationsanteilen simulierte Steuergeräte) jeweils eine eindeutige Identifikation (ID) aufweisen und quasi nur mit den Teilnehmern ihres Netzwerks direkt verbunden sind, bzw. nur an diese direkt Nachrichten senden können. Bei den Netzwerken kann es sich um reale Netzwerke oder virtuelle Netzwerke mit virtuellen Schnittstellen handeln.

In dem ersten Netzwerk werden Teile der Kommunikation der weiteren Steuergeräte simuliert, insbesondere werden zu erwartende Nachrichten für das zu testende Steuergerät erstellt. Der Inhalt einer solchen Nachricht oder die Nachricht selbst wird dann aus dem Nachrichten-Puffer entnommen und ggf. werden die Nachricht und/oder ihr Inhalt vor der Weitergabe an das zu testende Steuergerät manipuliert. Die Trennung von Eingangs- und Ausgangsnetzwerk ermöglicht eine solche Manipulation der Nachrichten in dem Nachrichten-Puffer, vor dem Versenden. Zum Versenden werden die Nachrichten in eine Versende-Queue oder einen Versende-Puffer für die erste Steuergeräte-Schnittstelle übergeben, und von dort über die erste Steuergeräte-Schnittstelle an das zu testende Steuergerät.

Die in einem Fahrzeug aufgezeichneten Nachrichten können Zeitstempel sowie Sicherungen (z.B. einen sogenannten Message Authentication Code (MAC)) enthalten und/oder verschlüsselt sein. Aufgrund der in Steuergeräten in der Regel implementierten Prüfung der Zeitinformationen und der Sicherung würde das zu testende Steuergerät bei einer reinen Weiterleitung aufgezeichneter Nachrichten sofort merken, dass eine Nachricht nicht aktuell ist und diese verwerfen. Ist eine Nachricht verschlüsselt, wären die Daten gar nicht erst lesbar, wenn die Verschlüsselung von einem aktuellen Zeitstempel abhängt. Die Erfindung wird definiert durch die Gegenstände der unabhängigen Ansprüche.

Dadurch, dass erfindungsgemäß getrennte Netzwerke verwendet werden, kann eine aufgezeichnete Nachricht, die von der Wiedergabe-Einheit versendet wird, zunächst ordnungsgemäß von dem ersten Software-Modul im zweiten Netzwerk entgegengenommen werden. Dabei werden alle Sicherungen geprüft und alle Entschlüsselungen ordnungsgemäß durchgeführt, wenn dem simulierten zu testenden Steuergerät (d.h. dem ersten Software-Modul) das richtige Schlüsselmaterial vorliegt. Die Nachrichten-Inhalte sind danach lesbar, können verarbeitet und auch verändert werden (z.B. kann ein Zeitstempel aktualisiert werden) und werden so an das erste Netzwerk weitergegeben. Dort sichert und verschlüsselt das weitere Software-Modul die manipulierten Daten/Nachrichten erneut und sendet diese dann an das zu testende Steuergerät. Da auch dabei Sicherungen und Verschlüsselungen mit den Original-Schlüsseln erfolgen, kann das zu testende Steuergerät die Manipulation nicht erkennen und verarbeitet die empfangenen Nachrichten, als wären sie von einem realen weiteren Steuergerät gekommen.

Der Aufbau mit getrennten Netzwerken ermöglicht in einer weiteren Ausführungsform, dass mindestens eine weitere Steuergeräte-Schnittstelle am Simulator vorgehalten ist, mit der das erste weitere Steuergerät und/oder ein zweites weiteres reales oder virtuelles Steuergerät real oder virtuell an das zweite Netzwerk angeschlossen ist, wobei im zweiten Netzwerk mittels eines weiteren Software-Moduls des Simulationsmodells das zu testende Steuergerät als Kommunikationspartner mindestens für das erste weitere Steuergerät simuliert wird, wobei über die weiteren Steuergeräte-Schnittstellen eingehende Nachrichten des ersten und/oder des zweiten weiteren Steuergeräts in die Queue aufgenommen und von dort in den Nachrichten-Puffer geschrieben werden.

Somit ist auf dem Simulator bevorzugt eine einzige Queue für alle Nachrichten, die in dem zweiten und/oder dritten Netzwerk (einem Eingangsnetzwerk) eingehen vorgehalten, also für alle Nachrichten, egal, ob es sich um aufgezeichnete Nachrichten von der Wiedergabe-Einheit oder um aktuelle Nachrichten von einem real oder virtuell angeschlossenen Steuergerät handelt.

Die getrennten Netzwerke sind auch in diesem Fall besonders vorteilhaft, da sie ermöglichen, dass ein durch ein Software-Modul simuliertes Steuergerät in dem einen Netzwerk dieselbe IP-Adresse aufweist wie das reale oder virtuelle Steuergerät in dem anderen Netzwerk. Der Simulator ist somit für die realen und virtuellen Steuergeräte völlig transparent, d.h. den realen und emulierten Steuergeräten erscheint es, als würden sie direkt miteinander kommunizieren. Somit können Nachrichten zu Testzwecken "unbemerkt" manipuliert werden.

Ein weiterer Vorteil, auch reale Steuergeräte an den Simulator anschließen und/oder weitere virtuelle Steuergeräte in dem Simulator zu emulieren und an der Simulation beteiligen zu können, liegt darin, dass die Steuergeräte schon einmal im Verbund getestet werden können. Diese Situation ist bei einem HIL- oder SIL-Simulator in der Regel gegeben, aber in Kombination mit der erfindungsgemäßen Wiedergabe-Einheit an dem Simulator ist es möglich, Teile der Kommunikation des realen oder virtuellen Steuergerätes durch aufgezeichnete Nachrichten zu ersetzen und umgekehrt.

Bevorzugt weisen die Nachrichten eine Kennzeichnung auf, wobei der Nachrichten-Puffer auf dem Simulator derart eingerichtet wird, dass für mindestens eine vorbestimmte Nachrichten-Kennzeichnung jeweils ein dedizierter Nachrichten-Puffer vorgehalten ist, wobei jeder der dedizierten Nachrichten-Puffer eingerichtet ist, eine bestimmte Anzahl von Nachrichten mit der entsprechenden Kennzeichnung aufzunehmen.

Bei den Nachrichten handelt es sich beispielsweise um Nachrichten aus einem automotiven System, etwa um CAN-, Flexray- oder Ethernet-Nachrichten. Zum Beispiel bestehen die Nachrichten aus einem Ethernet-Frame und die aufgenommenen Nachrichten weisen noch einen von der Wiedergabe-Einheit oder beim Empfang am Simulator vergebenen Zeitstempel auf, der dann vor der Wiedergabe an das zu testende Steuergerät wieder entfernt wird. Mit diesem vom Simulator oder der Wiedergabe-Einheit vergebene Zeitstempel ist ein Zeitstempel gemeint, der zusätzlich zu eventuell in den aufgezeichneten Nachrichten vorhandenen Zeitstempeln, den empfangenen Nachrichten angeheftet wird.

Der Simulator wird vor dem Test des Steuergerätes konfiguriert, wobei in der Konfiguration festgelegt wird (z.B. in einer Datenbank, auf die das Simulationsmodell während der Simulation Zugriff hat), welche Nachrichten von der Eingangsseite (hier das zweite Netzwerk) an die Ausgangsseite (hier das erste Netzwerk), d.h. das zu testende Steuergerät, weitergeleitet werden sollen. Des Weiteren ist in der Konfiguration angebbar, für welche Nachrichten die Wiedergabe aufgezeichneter Nachrichten erfolgen soll. Die Kennzeichnung erfolgt anhand der Socket-Informationen (über welche IP-Ports wird die Nachricht versendet) und ggf. über die Informationen zum Header der Nachricht, d.h. der entsprechenden Protocol Data Unit (PDU), falls die PDU einen Header aufweist. Bevorzugt werden als Kennzeichnung die Nachrichten mit einem Index für jede PDU versehen. Für jede für die Weiterleitung konfigurierte Nachricht (PDU) wird dann zur Initialisierungsphase des Simulationsmodells ein dedizierter Nachrichten-Puffer angelegt, der eingerichtet ist, eine bestimmte Anzahl von PDUs der entsprechenden Kennzeichnung aufzunehmen, beispielsweise vier.

Äußerst bevorzugt ist die Wiedergabe aufgezeichneter Nachrichten während der Laufzeit der Simulation aktivierbar (Start der Wiedergabe) und deaktivierbar (Beenden der Wiedergabe), insbesondere für einzelne ausgewählte Nachrichten. Es wird also ein Umschalten zwischen der Weiterleitung aufgezeichneter Nachrichten und der Weiterleitung der Nachrichten von den weiteren Steuergeräten ermöglicht.

In einer weiteren Ausführungsform weist das Simulationsmodell eine Restbussimulation auf, wobei in der Restbussimulation Nachrichten von weiteren Steuergeräten simuliert werden und wobei diese simulierten Nachrichten direkt in einen Versende-Puffer zur Übergabe an das zu testende Steuergerät geschrieben werden oder wobei simulierte Nachrichten mit einer bestimmten Kennzeichnung in den dedizierten Nachrichten-Puffer für Nachrichten mit der entsprechenden Kennzeichnung geschrieben werden.

Eine solche Restbussimulation wird typischerweise auf einem HIL- oder SIL-Simulator durchgeführt, z.B. wenn Steuergeräte aus dem Verbund des zu testenden Steuergeräts nicht real oder auch noch nicht als virtuelles Steuergerät vorliegen, ihre Kommunikation aber für den Test benötigt wird. Vorteilhaft ist hier, dass die Restbussimulation mit der Wiedergabe aufgezeichneter Nachrichten kombinierbar ist und sich so Nachrichten, die nicht in den Aufzeichnungen enthalten sind, ergänzen lassen. Auch ist es möglich, Nachrichten, die aus dem zweiten oder dem dritten Netzwerk eingehen durch Nachrichten aus der Restbussimulation zu ersetzen, indem die Nachrichten von den weiteren Steuergeräten oder von der Wiedergabe-Einheit im Nachrichten-Puffer oder auch erst im Versende-Puffer überschrieben werden. Mit Versende-Puffer ist hier der Puffer-Speicher gemeint, der zu der ersten Schnittstelle gehört. Die Restbussimulation wird bevorzugt im ersten Netzwerk ausgeführt, sodass die dort erzeugten Nachrichten direkt in den Versende-Puffer geschrieben werden können.

Bevorzugt ist der Simulator mittels des Wiedergabe-Codes eingerichtet, Nachrichten vor der Aufnahme in die Queue jeweils mit einer Meta-Information zu versehen, wobei die Meta-Information Auskunft gibt, ob es sich bei der Nachricht um eine aufgezeichnete Nachricht von der Wiedergabe-Einheit handelt.

Diese Meta-Information ermöglicht es, in der Queue Nachrichten dahingehend zu unterscheiden, ob sie von der Wiedergabe-Einheit oder von einem der angeschlossenen weiteren Steuergeräte kommen. Äußerst bevorzugt werden auch die eingehenden Nachrichten der weiteren Steuergeräte mit einer Meta-Information versehen, die kennzeichnet, dass diese Nachrichten nicht von der Wiedergabe-Einheit stammen.

In einer Weiterbildung der Erfindung werden ab dem Start der Wiedergabe der aufgezeichneten Nachrichten, bei der Übergabe von Nachrichten aus der Queue in den Nachrichten-Puffer, die Meta-Informationen der Nachrichten abgefragt und, gemäß den Meta-Informationen an den Nachrichten in der Queue, diejenigen Nachrichten, die von dem ersten weiteren Steuergerät und/oder dem zweiten weiteren Steuergerät gesendet wurden, verworfen. Aufgezeichnete Nachrichten von der Wiedergabe-Einheit werden in die Queue aufgenommen, in den Nachrichten-Puffer geschrieben und gemäß der Taktung des Simulationsmodells an das zu testende Steuergerät übergeben.

Durch diesen Mechanismus kann der Test des Steuergeräts erweitert werden. Der Testaufbau eines HIL-Test mit den angeschlossenen weiteren Steuergeräten an einem Simulator ermöglicht, mit der realen Hardware der Steuergeräte deren Zusammenspiel zu testen. Bei einem solchen Laboraufbau lassen sich aber nicht beliebige Testfahrten nachstellen. Durch das erfindungsgemäße Verfahren können komplexe Fahrmanöver eingespielt werden.

Erfindungsgemäß erfolgt die Übergabe der Nachrichten von dem zweiten Netzwerk in das erste Netzwerk entweder durch ein Parsen der Nachrichten im zweiten Netzwerk und eine anschließende Parameterübergabe mittels eines geeigneten Programms in das erste Netzwerk oder indem die Nachrichten in einem gemeinsamen Speicherbereich, insbesondere in dem Nachrichten-Puffer, abgelegt werden, wobei auf den Nachrichten-Puffer eine Zugriffsmöglichkeit sowohl von dem ersten Netzwerk als auch von dem zweiten Netzwerk und/oder dem dritten Netzwerk besteht. Letztere Möglichkeit minimiert den Ressourcenverbrauch, da ein Umkopieren der Parameter vermieden wird.

Die genannten Software-Module des Simulationsmodels simulieren echte Steuergeräte insofern, als sie die Kommunikationsanteile eines Steuergeräts nachbilden, insbesondere Service-Nachrichten oder Nachrichten zur Signalübertragung. Beispielsweise wird eine Anfrage-Nachricht von einem der weiteren Steuergeräte im zweiten Netzwerk angenommen und mittels des ersten Software-Moduls, welches das zu testende Steuergerät simuliert, eine entsprechende Antwort-Nachricht erstellt und versendet. Dabei wird die Anfrage-Nachricht an das zu testende Steuergerät weitergeleitet, indem sie über den Nachrichten-Puffer oder durch Parsen in das erste Netzwerk übergeben und von dort über die erste Steuergeräte-Schnittstelle an das zu testende Steuergerät übertragen wird. Entsprechend wird die Antwort-Nachricht von dem zu testenden Steuergerät an das entsprechende weitere Steuergerät weitergeleitet. Andere Nachrichten sind Ereignis-getrieben. Tritt ein entsprechendes Ereignis auf, z.B. in der Simulation des Simulationsmodells, so werden entsprechende Nachrichten durch die Software-Module erzeugt und von dem Simulator versendet.

In einer weiteren Ausführungsform werden aufgezeichnete Nachrichten, bei denen es sich um Service-Nachrichten für eine Service-basierte Kommunikation und dabei um Antwort-Nachrichten (Response-Nachrichten) handelt, im Nachrichten-Puffer so lange zurückgehalten, bis von dem zu testenden Steuergerät eine entsprechenden Anfrage-Nachricht (Request-Nachricht) eingeht. Dabei wird der Header der Antwort-Nachricht für die Übergabe an das zu testende Steuergerät derart manipuliert, dass sie von dem zu testenden Steuergerät akzeptiert wird.

Beispielsweise werden der Zeitstempel, der Nachrichtenauthentifizierungscode (MAC) und/oder ein Zählerwert entsprechend angepasst. So kann eine Nachricht, die von dem zu testenden Steuergerät eigentlich nicht angenommen würde, weil beispielsweise der Zählerwert und ein mit dem aktuellen Zählerwert zu erzeugender nicht aktuell sind, aufgrund der Kenntnis des aktuellen Zählerwerts im Simulator und entsprechender Verschlüsselungsalgorithmen derart manipuliert werden, dass sie von dem zu testenden Steuergerät akzeptiert wird.

Bevorzugt wird im Simulator beim Empfang jeder aufgezeichneten Nachricht von der Wiedergabe-Einheit geprüft, ob es sich um eine Service Discovery Nachricht handelt und im Fall einer Service Discovery Nachricht wird geprüft, welchen Empfangsstatus die Nachricht für den entsprechenden Service aufweist.

Sind an der Kommunikation sowohl an das erste Netzwerk als auch an das zweite Netzwerk mehrere Steuergeräte angeschlossen (d.h. für den Fall, dass im Netzwerk des zu testenden Steuergeräts mindestens ein weiteres Steuergerät angeschlossen ist), so ist es vorteilhaft, die Konfiguration des Simulators so zu erweitern, dass für Nachrichten, die beispielsweise von einem an das zweite Netzwerk angeschlossenen Steuergerät an mehrere Steuergeräte am ersten Netzwerk übermittelt werden sollen, diese Nachrichten nur über ein simuliertes Steuergerät weitergegeben werden, d.h. dass Nachrichten, die von dem ersten weiteren Steuergerät an mehr als ein durch ein Software-Modul simuliertes Steuergerät gesendet werden, nur von einem dafür vorgesehenen Software-Modul weitergeleitet werden, d.h. nur in den dedizierten Nachrichten-Puffer für die Nachrichten dieses simulierten Steuergerätes geschrieben werden, um eine doppelte Übertragung gleicher Nachrichten zu vermeiden. Wird das für die Weiterleitung vorgesehene simulierte Steuergerät in den aufgezeichneten Nachrichten von dem Service abgemeldet, so kann keine Weiterleitung an die weiteren Steuergeräte im ersten Netzwerk mehr erfolgen. Durch Überprüfung des Empfangsstatus für den Service kann eine rechtzeitige Konfiguration auf ein Steuergerät erfolgen, welches aktiv ist.

In einer Weiterbildung der Erfindung wird bei jeder empfangenen aufgezeichneten Nachricht deren Header geprüft und bei Vorliegen eines Zeitstempels wird diese aufgezeichnete Nachricht erst abgespielt, wenn die Simulationszeit im Simulator größer oder gleich der durch den Zeitstempel gegebenen Zeit ist oder alternativ wird die aufgezeichnete Nachricht erst abgespielt, wenn die Differenz zum Zeitstempel einer zuvor eingegangenen aufgezeichneten Nachricht größer oder gleich der Zeit ist, die seit der Wiedergabe der zuvor eingegangenen aufgezeichneten Nachricht verstrichen ist.

Auf diese Weise wird gewährleistet, dass die aufgezeichneten Nachrichten im richtigen zeitlichen Abstand zueinander abgespielt werden.

In einer alternativen Ausführungsform der Erfindung ist die Wiedergabe-Einheit über die Wiedergabe-Schnittstelle mit dem dritten Netzwerk verbunden und das erste weitere Steuergerät und/oder das zweite weitere Steuergerät sind über die weitere Steuergeräte-Schnittstelle mit dem zweiten Netzwerk verbunden. Somit wird eine saubere Trennung von weiteren Steuergeräten und Wiedergabe-Einheit ermöglicht und auch ein einfaches Umschalten zwischen dem Empfang aufgezeichneter Nachrichten und dem Empfang der aktuellen Nachrichten eines realen oder virtuellen Steuergerätes.

Die Aufgabe wird ebenfalls gelöst durch einen Simulator, der eingerichtet ist, das erfindungsgemäße Verfahren durchzuführen.

Die Erfindung wird nachfolgend unter Bezugnahme auf die Zeichnungen zu beispielhaften Ausführungsformen näher erläutert.

Zur Verdeutlichung der Beschreibung zeigen die Figuren:
- Figur 1a: eine schematische Darstellung des erfindungsgemäßen Simulators zur Durchführung des Verfahrens zum Testen eines Steuergeräts mittels eines HIL Systems
- Figur 1b: eine schematische Darstellung des erfindungsgemäßen Simulators zur Durchführung des Verfahrens zum Testen eines Steuergeräts mittels eines SIL Systems
- Figur 2: eine schematische Darstellung des erfindungsgemäßen Simulators zur Durchführung des Verfahrens zum Testen eines oder mehrerer Steuergeräte
- Figur 3: Ein Flussdiagramm zum Ablauf des erfindungsgemäßen Verfahrens

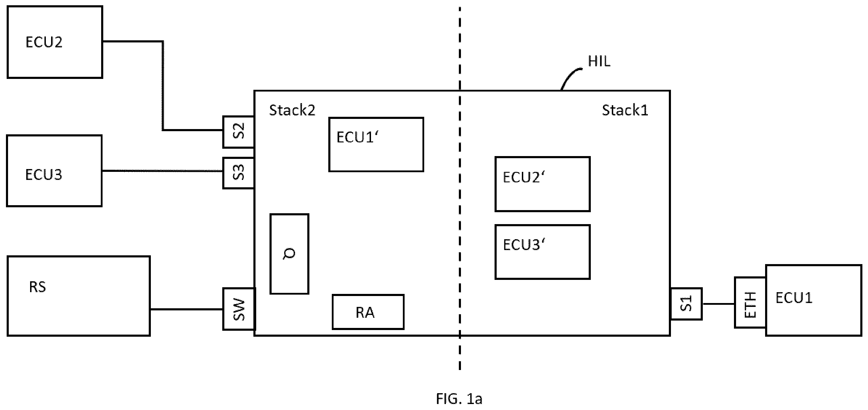

Figur 1a zeigt einen erfindungsgemäßen Simulator HIL, auf dem ein erstes Netzwerk Stack1 (Ausgangsseite) und ein zweites Netzwerk Stack2 (Eingangsseite) vorgehalten sind. Das zu testende Steuergerät ECU1 ist über die erste Steuergeräte-Schnittstelle S1 des Simulators HIL und seine Ethernet-Schnittstelle ETH mit dem Simulator HIL verbunden. Auf der Eingangsseite sind ein erstes weiteres Steuergerät ECU2 und ein zweites weiteres Steuergerät ECU3 über die weiteren Steuergeräte-Schnittstellen S2, S3 des Simulators HIL mit dem zweiten Netzwerk Stack2 verbunden (die Ethernet-Schnittstellen an den weiteren Steuergeräten ECU2 und ECU3 sind hier nicht abgebildet). Weiter ist eine Wiedergabe-Einheit RS über die Wiedergabe-Schnittstelle SW mit dem zweiten Netzwerk Stack2 verbunden. Es soll das kommunikative Zusammenspiel zwischen den Steuergeräten getestet werden, welche in einem realen System eigentlich in einem Steuergeräteverbund zusammengeschlossen sind. Zu Testzwecken ist hier jedoch der Simulator HIL zwischengeschaltet, um Nachrichten von den weiteren Steuergeräten ECU2, ECU3 manipulieren zu können. Um den realen Steuergeräten vorzutäuschen, dass sie direkt mit ihren vorgesehenen Kommunikationspartnern kommunizieren, werden diese in dem jeweiligen Netzwerk für die dort angeschlossenen Kommunikationspartner simuliert, d.h. alle von dem Gegenpart erwarteten Nachrichten und Reaktionen (Antwort-Nachrichten, Empfangsbestätigungen, etc.) werden in der Simulation erstellt, bzw. aus dem jeweils anderen Netzwerk übernommen, und an die real angeschlossenen Steuergeräte gesendet. Das zu testende Steuergerät ECU1 wird mittels des ersten Software-Moduls ECU1' im zweiten Netzwerk Stack2 simuliert, die weiteren Steuergeräte ECU2, ECU3 werden im ersten Netzwerk Stack1 mittels der weiteren Software-Module ECU2', ECU1' simuliert.

Alle Nachrichten, die über die weiteren Steuergeräte-Schnittstellen S2, S3 eingehen, werden in eine Queue Q, quasi eine Empfangs-Queue, aufgenommen. Aus dieser Queue Q werden diejenigen Nachrichten, für welche konfiguriert wurde, dass sie an das zu testende Steuergerät weiterzuleiten sind, in einen Nachrichten-Puffer (nicht dargestellt) geschrieben, auf welchen sowohl aus dem ersten Netzwerk Stack1 als auch aus dem zweiten Netzwerk Stack2 zugegriffen werden kann.

In der Wiedergabe-Einheit RS sind aufgezeichnete Nachrichten vorgehalten, beispielsweise aus der Aufnahme des Nachrichtenverkehrs während einer Testfahrt in einem Auto, in welchem entsprechende Steuergeräte ECU1, ECU2, ECU3 verbaut waren. Um auch Nachrichten aus einer solchen Testfahrt in die Simulation des Tests einfügen zu können, ist in dem zweiten Netzwerk Stack2 ein Wiedergabe-Code RA vorgehalten, welcher die Wiedergabe der aufgezeichneten Nachrichten steuert. Der Startzeitpunkt der Wiedergabe wird in der Konfiguration oder durch einen Befehl eines Nutzers, z.B. durch eine Eingabe über eine grafische Benutzeroberfläche (GUI), bestimmt. Ab diesem Startzeitpunkt werden die am Simulator HIL über die Wiedergabe-Schnittstelle SW empfangenen Nachrichten in die Queue Q aufgenommen. Im Simulator HIL werden die aufgenommenen Nachrichten mit einer Meta-Information versehen, sodass sie als Nachrichten von der Wiedergabe-Einheit RS gekennzeichnet sind. Ab dem Startzeitpunkt der Wiedergabe werden aus der Queue Q nur noch die Nachrichten in den Nachrichten-Puffer zur Weiterleitung an das erste Netzwerk Stack1 geschrieben, welche der Meta-Information nach von der Wiedergabe-Einheit RS kommen, wohingegen die Nachrichten, die in dieser Zeit von den real angeschlossenen Steuergeräten empfangen werden aus der Queue Q verworfen werden. Im ersten Netzwerk Stack1 werden die für die vom zu testenden Steuergerät ECU1 erwarteten Nachrichten benötigten Daten aus dem Nachrichten-Puffer entnommen, als geeignete Nachrichten verpackt, d.h. ggf. manipuliert, und über die erste Steuergeräte-Schnittstelle S1 an das zu testende Steuergerät ECU1 versendet.

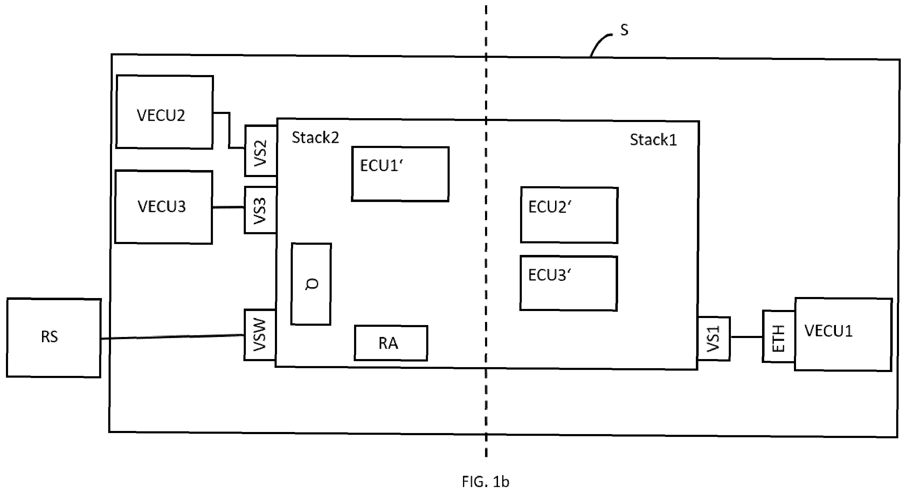

Figur 1b zeigt den analogen Testaufbau für einen SIL-Simulator S. Der Simulator kann dabei auf einem PC oder auch in einem PC-Cluster bzw. in einer Cloud implementiert sein. Hier wird statt mit realen mit virtuellen Steuergeräten VECU1, VECU2, VECU3 getestet. Alle virtuellen Steuergeräte VECU1, VECU2, VECU3 werden in dem Simulator ausgeführt, d.h. auf einer geeigneten Simulationsplattform. Auch hier liegen zwei getrennte Netzwerke Stack1, Stack2 vor, um die Kommunikation zwischen den virtuellen Steuergeräten VECU1, VECU2, VECU3 manipulieren zu können. Die virtuellen Steuergeräte VECU1, VECU2, VECU3 sind über virtuelle Schnittstellen VETH, VS1, VS2, VS3 als Kommunikationsteilnehmer des jeweiligen Netzwerks Stack1, Stack2 eingebunden, und zwar über virtuelle Busse, welche das Verhalten (Zeitverhalten, Triggern von Nachrichten etc.) von realen Bussen simulieren. Die in dem jeweiligen Netzwerk nicht als virtuelles Steuergerät vorhandenen Teilnehmer werden auch hier in der Simulation der Kommunikation durch Software-Module ECU1', ECU2' und ECU3' ersetzt, welche den virtuellen Steuergeräten VECU1, VECU2, VEUC3 in ihrem jeweiligen Netzwerk Stack1, Stack2 die von ihnen erwarteten bzw. zu empfangenden Nachrichten senden.

Die Wiedergabe-Einheit RS ist in Fig. 1b durch ein Softwareprogramm zum Abspielen von aufgezeichneten Nachrichten gegeben und über eine Software-Schnittstelle VSW mit dem Simulator verbunden und in die Simulation integriert. Das Softwareprogramm ist dann beispielsweise als weiteres Programm auf dem PC, in dem PC-Cluster oder in der Cloud implementiert, wo auch der Simulator vorgehalten ist. Das Einbinden der Wiedergabe aufgezeichneter Nachrichten verläuft genauso wie es auch zu Fig. 1a beschrieben ist.

Desweiteren ist es auch möglich, dass virtuelle Steuergeräte VECU1, VECU2, VECU 3 auf einem HIL-Simulator HIL simuliert werden, beispielsweise, wenn das zu testende Steuergerät ECU1 schon real vorliegt, aber noch nicht alle Kommunikationspartner ECU2, ECU3 physikalisch umgesetzt sind. Es könnte dann etwa das erste weitere Steuergerät ECU2 real an den Simulator HIL angeschlossen sein, ein zweites weiteres Steuergerät ECU3 aber in dem HIL-Simulator HIL in Form eines virtuellen Steuergeräts VECU3 emuliert werden.

Ein anderes hybrides Szenario wäre, dass das zu testende Steuergerät ECU1 an einen echtzeitfähigen PC angeschlossen wird, auf dem die weiteren Kommunikationspartner als virtuelle Steuergeräte VECU2, VECU2 in einem Simulator S simuliert werden. Auch könnte ein zu testendes virtuelles Steuergerät VECU1 mit realen Kommunikationspartnern ECU2, ECU3 getestet werden.

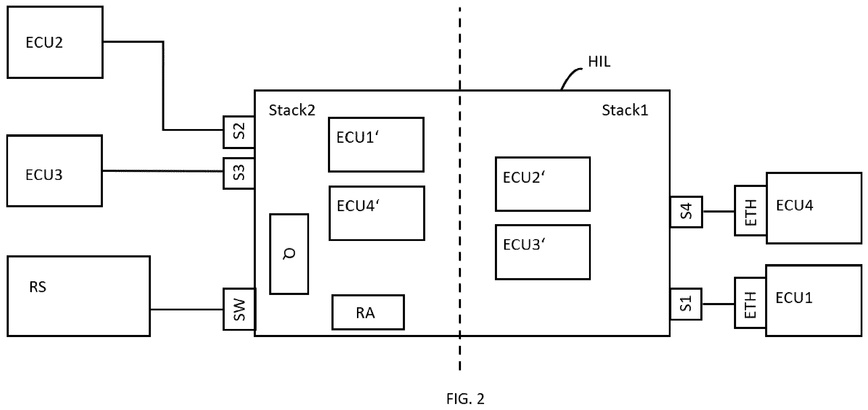

Figur 2 zeigt eine Erweiterung der Situation in Figur 1a, die entsprechend auch auf den Testaufbau für einen SIL-Simulator in Figur 1b anwendbar ist. Hier ist auch im zweiten Netzwerk Stack1 noch ein weiteres Steuergerät ECU4 angeschlossen. Haben die an das erste Netzwerk Stack1 angeschlossenen Steuergeräte ECU1, ECU4 nun beide einen Service bei dem ersten weiteren Steuergerät ECU2 abonniert, so ist es vorteilhaft, in der Simulation im zweiten Netzwerk Stack2 (Software-Module ECU1' und ECU4') die Nachrichten von diesem Service nur einmal und nur über einen dedizierten Nachrichten-Puffer an das erste Netzwerk Stack1 weiterzugeben, um Nachrichten-Dopplung zu vermeiden. Es werden also beispielsweise Nachrichten, die an ECU4' gehen sollen, mit in den dedizierten Nachrichten-Puffer für die Nachrichten dieses Services an ECU1' geschrieben. Für die Wiedergabe von aufgezeichneten Nachrichten wird in diesem Fall in den aufgezeichneten Nachrichten geprüft, ob sich das Steuergerät ECU1, über welches die Nachrichten-Weiterleitung für diesen Service erfolgt, während der Aufnahme von dem Service abgemeldet hat. Ist dies der Fall, so wird die Konfiguration derart geändert, dass die Weiterleitung dennoch erfolgt.

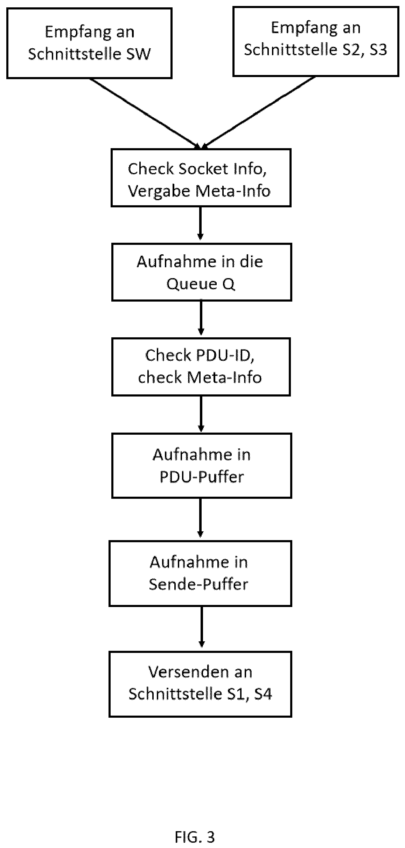

Figur 3 zeigt ein Flussdiagramm zum Ablauf des erfindungsgemäßen Verfahrens. Dargestellt ist der Weg der Nachrichten bei einer Weiterleitung vom zweiten Netzwerk Stack2 zum ersten Netzwerk Stack1. Der Empfang der Nachrichten erfolgt für die Nachrichten der weiteren Steuergeräte ECU2, ECU3 an einer der Schnittstellen S2, S3. Die aufgezeichneten Nachrichten von der Wiedergabe-Einheit RS werden an der Wiedergabe-Schnittstelle SW empfangen. Beim Empfang an den Schnittstellen S2, S3, SW wird zunächst die Socket-Information der Nachrichten geprüft und anhand dieser Informationen und eventueller weiterer Informationen zur entsprechenden PDU wird eine Kennzeichnung PDU-ID vergeben. Außerdem wird ein Zeitstempel vergeben und den Nachrichten eine Meta-Information angehängt, anhand derer ersichtlich ist, ob die Nachrichten von der Wiedergabe-Einheit RS stammen. Anschließend werden die eingegangenen Nachrichten in die Queue Q aufgenommen, unabhängig davon, an welcher der genannten Schnittstellen die Nachrichten empfangen wurden. Aus der Queue Q werden Nachrichten zur Weiterleitung an das erste Netzwerk Stack1 in einen dedizierten Nachrichten-Puffer PDU-Puffer geschrieben. Dazu wird zuvor die Nachrichten-Kennzeichnung PDU-ID geprüft. Ist in der Konfiguration der Simulation die Nachrichten-Kennzeichnung PDU-ID für die Weiterleitung vorgesehen, so ist ein entsprechender dedizierter Nachrichten-Puffer vorgehalten. Ist der Wiedergabe-Modus aktiv, so werden nur aufgezeichnete Nachrichten von der Wiedergabe-Schnittstelle SW in den Nachrichtenpuffer geschrieben, die Nachrichten der weiteren Steuergeräte ECU2, ECU3 werden verworfen. Andernfalls kann der Simulator HIL eingerichtet sein, nur die Nachrichten von den weiteren Steuergeräten ECU2, ECU3 in den Nachrichten-Puffer aufzunehmen. Das Simulationsmodell stößt während seiner Ausführung auf dem Simulator das Versenden der Nachricht an das zu testende Steuergerät ECU1 an, indem auf einen entsprechenden Trigger-Befehl hin die Nachrichten aus dem Nachrichten-Puffer in den Versende-Puffer für die erste Steuergeräte-Schnittstelle S1 aufgenommen werden.

## Patentansprüche

1. Verfahren für den Test mindestens eines Steuergeräts (ECU1), wobei auf einem Simulator (HIL, S) mindestens zwei getrennte Netzwerke (Stack1, Stack2) vorgehalten sind, wobei das zu testende Steuergerät (ECU1, VECU1) mit dem Simulator (HIL) über ein erstes Netzwerk (Stack1) und eine erste Steuergeräte-Schnittstelle (S1) verbunden ist oder in dem Simulator (S) als Teilnehmer des ersten Netzwerks (Stack1) emuliert wird, wobei das zu testende Steuergerät (ECU1, VECU1) dafür vorgesehen ist, mit mindestens einem ersten weiteren Steuergerät (ECU2, VECU2) zu kommunizieren, wobei die Kommunikation des ersten weiteren Steuergeräts (ECU2, VECU2) zumindest teilweise in Form von aufgezeichneten Nachrichten vorliegt, wobei mittels mindestens einer Wiedergabe-Schnittstelle (SW, VSW) eine Wiedergabe-Einheit (RS) zum Abspielen der aufgezeichneten Nachrichten mit dem zweiten Netzwerk (Stack2) oder einem dritten Netzwerk auf dem Simulator (HIL, S) verbunden ist, wobei auf dem Simulator (HIL, S) eine Queue (Q) für in dem zweiten und/oder dem dritten Netzwerk empfangene Nachrichten vorgehalten ist und wobei das Verfahren die Schritte umfasst:
• Simulieren von zumindest Teilen der Kommunikation des zu testenden Steuergeräts mit mindestens dem ersten weiteren Steuergerät (ECU2, VECU2) mittels eines auf dem Simulator (HIL, S) vorgehaltenen Simulationsmodells, wobei im zweiten Netzwerk (Stack2) mittels eines ersten Software-Moduls (ECU1') des Simulationsmodells mindestens Teile der Kommunikation des zu testenden Steuergeräts (ECU1, VECU1) simuliert werden und wobei auf dem Simulator (HIL, S) in dem ersten Netzwerk (Stack1) die mit dem zu testenden Steuergerät (ECU1, VECU1) kommunizierenden weiteren Steuergeräte (ECU2, ECU3, VECU2, VECU3) als Kommunikationspartner für das zu testende Steuergerät (ECU1, VECU) mittels mindestens eines weiteren Software-Moduls (ECU2', ECU3') des Simulationsmodells simuliert werden,
• Steuern des Abspielens der aufgezeichneten und von der Wiedergabe-Einheit (RS) an den Simulator (HIL, S) übertragenen und dort empfangenen Nachrichten mittels eines auf dem Simulator (HIL, S) vorgehaltenen Wiedergabe-Codes (RA), wobei ein Befehl zum Starten des Abspielens bewirkt, dass die aufgezeichneten Nachrichten, die der Simulator von der Wiedergabe-Einheit (RS) empfängt, in die Queue (Q) aufgenommen und von dort in einen Nachrichten-Puffer geschrieben werden, um auf einen Trigger-Befehl aus dem Simulationsmodell an das zu testende Steuergerät (ECU1) übergeben zu werden.

2. Verfahren nach Anspruch 1, wobei mindestens eine weitere Steuergeräte-Schnittstelle (S2, S3, VS2, VS3) am Simulator (HIL) oder im Simulator (S) vorgehalten ist, mit der das erste weitere Steuergerät (ECU2, VECU2) und/oder ein zweites weiteres Steuergerät (ECU3, VECU3) an das zweite Netzwerk (Stack2) angeschlossen ist, wobei im zweiten Netzwerk (Stack2) mittels des ersten Software-Moduls (ECU1') des Simulationsmodells das zu testende Steuergerät (ECU1, VECU1) als Kommunikationspartner mindestens für das erste weitere Steuergerät (ECU2, VECU2) simuliert wird, wobei über die weiteren Steuergeräte-Schnittstellen (S2, S3) eingehende Nachrichten des ersten und/oder des zweiten weiteren Steuergeräts (ECU2, VECU2) in die Queue (Q) aufgenommen und von dort in den Nachrichten-Puffer geschrieben werden.

3. Verfahren nach Anspruch 1 oder 2, wobei die Nachrichten eine Kennzeichnung (ID) aufweisen, wobei der Nachrichten-Puffer auf dem Simulator (HIL, S) derart eingerichtet wird, dass für mindestens eine vorbestimmte Nachrichten-Kennzeichnung jeweils ein dedizierter Nachrichten-Puffer vorgehalten ist, wobei jeder der dedizierten Nachrichten-Puffer eingerichtet ist, eine bestimmte Anzahl von Nachrichten mit der entsprechenden Kennzeichnung aufzunehmen.

4. Verfahren nach Anspruch 3, wobei das Simulationsmodell eine Restbussimulation aufweist, wobei in der Restbussimulation Nachrichten simuliert werden und wobei diese simulierten Nachrichten direkt in einen Versende-Puffer zur Übergabe an das zu testende Steuergerät (ECU1) geschrieben werden oder wobei simulierte Nachrichten mit einer bestimmten Kennzeichnung in den dedizierten Nachrichten-Puffer für Nachrichten mit der entsprechenden Kennzeichnung geschrieben werden.

5. Verfahren nach einem der vorherigen Ansprüche, wobei der Simulator eingerichtet ist, Nachrichten vor der Aufnahme in die Queue (Q) mit einer Meta-Information zu versehen, wobei die Meta-Information Auskunft gibt, ob es sich bei der Nachricht um eine aufgezeichnete Nachricht von der Wiedergabe-Einheit (RS) handelt.

6. Verfahren nach Anspruch 5, wobei ab dem Start des Abspielens der aufgezeichneten Nachrichten, bei der Übergabe von Nachrichten aus der Queue (Q) in den Nachrichten-Puffer, die Meta-Informationen der Nachrichten abgefragt werden und, gemäß den Meta-Informationen an den Nachrichten in der Queue (Q), diejenigen Nachrichten, die von dem ersten weiteren Steuergerät (ECU2, VECU2) und/oder dem zweiten weiteren Steuergerät (ECU3, VECU3) gesendet wurden, verworfen werden und nur die aufgezeichneten Nachrichten von der Wiedergabe-Einheit (RS) in den Nachrichten-Puffer geschrieben und an das zu testende Steuergerät (ECU1) übergeben werden.

7. Verfahren nach einem der vorherigen Ansprüche, wobei die Übergabe der Nachrichten von dem zweiten Netzwerk (Stack2) in das erste Netzwerk (Stack1) entweder durch ein Parsen der Nachrichten im zweiten Netzwerk (Stack2) und eine anschließende Parameterübergabe mittels eines geeigneten Programms erfolgt oder indem die Nachrichten in einem gemeinsamen Speicherbereich, insbesondere in dem Nachrichten-Puffer, abgelegt werden, wobei auf den Nachrichten-Puffer eine Zugriffsmöglichkeit sowohl von dem ersten Netzwerk (Stack1) als auch von dem zweiten Netzwerk (Stack2) und/oder dem dritten Netzwerk besteht.

8. Verfahren nach einem der vorherigen Ansprüche, wobei die Software-Module (ECU1', ECU2', ECU3', ECU4') echte Steuergeräte insofern simulieren, als sie die Kommunikationsanteile eines Steuergeräts (ECU1, ECU2, ECU3) nachbilden, insbesondere Service-Nachrichten oder Nachrichten zur Signalübertragung.

9. Verfahren nach einem der vorherigen Ansprüche, wobei aufgezeichnete Nachrichten, bei denen es sich um Service-Nachrichten und zwar um Antwort-Nachrichten (Response-Nachrichten) handelt, so lange zurückgehalten werden, bis von dem zu testenden Steuergerät (ECU1) eine entsprechenden Anfrage-Nachricht (Request-Nachricht) eingeht und wobei der Header der Antwort-Nachricht für die Übergabe an das zu testende Steuergerät (ECU1, VECU1) derart manipuliert wird, dass sie von dem zu testenden Steuergerät (ECU1, VECU1) akzeptiert wird.

10. Verfahren nach einem der vorherigen Ansprüche, wobei im Simulator (HIL, S) beim Empfang jeder aufgezeichneten Nachricht von der Wiedergabe-Einheit (RS) geprüft wird, ob es sich um eine Service Discovery Nachricht handelt und im Fall einer Service Discovery Nachricht geprüft wird, welchen Empfangsstatus die Nachricht für den entsprechenden Service aufweist.

11. Verfahren nach einem der vorherigen Ansprüche, wobei bei jeder empfangenen aufgezeichneten Nachricht deren Header geprüft wird und wobei bei Vorliegen eines Zeitstempels die aufgezeichnete Nachricht erst abgespielt wird, wenn die Simulationszeit im Simulator (HIL, S) größer oder gleich der durch den Zeitstempel gegebenen Zeit ist oder die aufgezeichnete Nachricht erst abgespielt wird, wenn die Differenz zum Zeitstempel einer zuvor eingegangenen aufgezeichneten Nachricht größer oder gleich der Zeit ist, die seit der Wiedergabe der zuvor eingegangenen aufgezeichneten Nachricht verstrichen ist.

12. Verfahren nach einem der vorherigen Ansprüche, wobei die Wiedergabe-Einheit (RS) über die Wiedergabe-Schnittstelle (SW, VSW) mit dem dritten Netzwerk verbunden ist und das erste weitere Steuergerät (ECU2, VECU2) und/oder das zweite weitere Steuergerät (ECU3, VECU3) über die weitere Steuergeräte-Schnittstelle (S2) mit dem zweiten Netzwerk (Stack2) verbunden sind.

13. Simulator (HIL, S), der eingerichtet ist, das Verfahren nach einem der vorstehenden Ansprüche durchzuführen.

## Claims

1. Method for testing at least one control unit (ECU1), at least two separate networks (Stack1, Stack2) being provided on a simulator (HIL, S), the control unit to be tested (ECU 1, VECU 1) is connected to the simulator (HIL) via a first network (Stack1) and a first control unit interface (S1) or is emulated in the simulator (S) as a participant in the first network (Stack1), the control unit to be tested (ECU1, VECU1) being intended to communicate with at least one first further control unit (ECU2, VECU2), wherein the communication of the first further control unit (ECU2, VECU2) is at least partly in the form of recorded messages, wherein a playback unit (RS) for playing back the recorded messages is connected to the second network (Stack2) or a third network on the simulator (HIL, S) by means of at least one playback interface (SW, VSW), wherein a queue (Q) for messages received in the second and/or the third network is provided on the simulator (HIL, S), and wherein the method comprises the steps of
- simulating at least parts of the communication of the control unit under test with at least the first further control unit (ECU2, VECU2) by means of a simulation model provided on the simulator (HIL, S), wherein in the second network (Stack2) by means of a first software module (ECU1') of the simulation model at least parts of the communication of the control unit to be tested (ECU1, VECU1) are simulated, and wherein on the simulator (HIL, S) in the first network (Stack1) the further control units (ECU2, ECU3, VECU2, VECU3) communicating with the control unit to be tested (ECU1, VECU1) are simulated as communication partners for the control unit to be tested (ECU1, VECU) by means of at least one further software module (ECU2', ECU3') of the simulation model,
- controlling by means of a playback code (RA) held on the simulator (HIL, S) the playback of the recorded messages, which are transmitted by the playback unit (RS) to the simulator (HIL, S) and received there, wherein a command to start playback having the effect that the recorded messages which the simulator receives from the playback unit (RS) are added to the queue (Q) and written from there into a message buffer in order to be transferred to the control unit to be tested (ECU1) in response to a trigger command from the simulation model.

2. Method according to claim 1, wherein at least one further control unit interface (S2, S3, VS2, VS3) is provided on the simulator (HIL) or in the simulator (S), with which the first further control unit (ECU2, VECU2) and/or a second further control unit (ECU3, VECU3) is connected to the second network (Stack2), wherein in the second network (Stack2) by means of the first software module (ECU1') of the simulation model the control unit to be tested (ECU1, VECU 1) is simulated as a communication partner at least for the first further control unit (ECU2, VECU2), incoming messages from the first and/or the second further control unit (ECU2, VECU2) being received in the queue (Q) via the further control unit interfaces (S2, S3) and written from there to the message buffer.

3. Method according to claim 1 or 2, wherein the messages have an identification (ID), wherein the message buffer is set up on the simulator (HIL, S) in such a way that a dedicated message buffer is provided for at least one predetermined message identification in each case, wherein each of the dedicated message buffers is set up to hold a specific number of messages with the corresponding identification.

4. Method according to claim 3, wherein the simulation model has a residual bus simulation, wherein messages are simulated in the residual bus simulation and wherein these simulated messages are written directly into a send buffer for transfer to the control unit to be tested (ECU1) or wherein simulated messages with a specific identification are written into the dedicated message buffer for messages with the corresponding identification.

5. Method according to one of the preceding claims, wherein the simulator is set up to provide messages with meta information before inclusion in the queue (Q), wherein the meta information provides information as to whether the message is a recorded message from the playback unit (RS).

6. Method according to claim 5, wherein from the start of the playback of the recorded messages, when messages are transferred from the queue (Q) to the message buffer, the meta information of the messages is interrogated and, according to the meta information on the messages in the queue (Q), those messages sent by the first further control unit (ECU2, VECU2) and/or the second further control unit (ECU3, VECU3) are discarded and only the recorded messages from the playback unit (RS) are written to the message buffer and transferred to the control unit to be tested (ECU1, VECU1).

7. Method according to one of the preceding claims, wherein the transfer of the messages from the second network (Stack2) to the first network (Stack1) takes place either by parsing the messages in the second network (Stack2) and a subsequent parameter transfer by means of a suitable program or by storing the messages in a common memory area, in particular in the message buffer, wherein the message buffer can be accessed both from the first network (Stack1) and from the second network (Stack2) and/or the third network.

8. Method according to one of the preceding claims, wherein the software modules (ECU1 ', ECU2', ECU3', ECU4') simulate real control units in that they simulate the communication components of a control unit (ECU1, ECU2, ECU3), in particular service messages or messages for signal transmission.

9. Method according to one of the preceding claims, wherein recorded messages, which are service messages, namely response messages, are retained until a corresponding request message is received from the control unit to be tested (ECU 1) and wherein the header of the response message for transfer to the control unit to be tested (ECU1, VECU1) is manipulated in such a way that it is accepted by the control unit to be tested (ECU 1, VECU1).

10. Method according to one of the preceding claims, wherein in the simulator (HIL, S), on receipt of each recorded message from the playback unit (RS), it is checked whether it is a service discovery message and, in the case of a service discovery message, it is checked which reception status the message has for the corresponding service.

11. Method according to one of the preceding claims, wherein the header of each received recorded message is checked and wherein, if a time stamp is present, the recorded message is not played until the simulation time in the simulator (HIL, S) is greater than or equal to the time given by the time stamp, or the recorded message is not played until the difference from the time stamp of a previously received recorded message is greater than or equal to the time that has elapsed since the previously received recorded message was played.

12. Method according to one of the preceding claims, wherein the playback unit (RS) is connected to the third network via the playback interface (SW, VSW) and the first further control unit (ECU2, VECU2) and/or the second further control unit (ECU3, VECU3) are connected to the second network (Stack2) via the further control unit interface (S2).

13. Simulator (HIL, S), which is set up to carry out the method according to one of the preceding claims.

## Revendications

1. Procédé pour le test d'au moins un appareil de commande (ECU1), dans lequel au moins deux réseaux séparés (Stack1, Stack2) sont maintenus sur un simulateur (HIL, S), et dans lequel l'appareil de commande à tester (ECU 1, VECU 1) est relié au simulateur (HIL) par l'intermédiaire d'un premier réseau (Stack1) et d'une première interface de appareil de commande (S1) ou est émulé dans le simulateur (S) en tant que participant au premier réseau (Stack1), l'appareil de commande à tester (ECU1, VECU1) étant prévu pour communiquer avec au moins un premier autre appareil de commande (ECU2, VECU2), la communication du premier autre appareil de commande (ECU2, VECU2) étant au moins partiellement sous la forme de messages enregistrés, une unité de lecture pour rejouer des messages (RS) étant reliée au deuxième réseau (Stack2) ou à un troisième réseau sur le simulateur (HIL, S) au moyen d'au moins une interface de lecture (SW, VSW) pour lire les messages enregistrés, une file d'attente (Q) étant conservée sur le simulateur (HIL, S) pour les messages reçus dans le deuxième et/ou le troisième réseau, et le procédé comprenant les étapes consistant à :
- simuler au moins des parties de la communication de l'appareil de commande à tester avec au moins le premier autre appareil de commande (ECU2, VECU2) au moyen d'un modèle de simulation conservé sur le simulateur (HIL, S), au moins des parties de la communication de l'appareil de commande à tester (ECU1, VECU1) étant simulées dans le deuxième réseau (Stack2) au moyen d'un premier module logiciel (ECU 1 ') du modèle de simulation, et les autres appareils de commande (ECU2, ECU3, VECU2, VECU3) communiquant avec l'appareil de commande à tester (ECU1, VECU1) étant simulés sur le simulateur (HIL, S) dans le premier réseau (Stack1) en tant que partenaires de communication pour l'appareil de commande à tester (ECU1, VECU) au moyen d'au moins un autre module logiciel (ECU2', ECU3') du modèle de simulation,
- commander au moyen d'un code de lecture (RA) conservé sur le simulateur (HIL, S) la lecture des messages enregistrés et transmis par l'unité de lecture pour rejouer des messages (RS) au simulateur (HIL, S) et reçus par celui-ci, une commande de lancement de la lecture provoquant, que les messages enregistrés que le simulateur reçoit de l'unité de lecture (RS) sont placés dans la file d'attente (Q) et, de là, écrits dans une mémoire tampon de messages pour être transmis à l'appareil de commande (ECU1) à tester en réponse à une instruction de déclenchement provenant du modèle de simulation.

2. Procédé selon la revendication 1, dans lequel au moins une autre interface d' appareil de commande (S2, S3, VS2, VS3) est maintenue sur le simulateur (HIL) ou dans le simulateur (S), avec laquelle le premier autre appareil de commande (ECU2, VECU2) et/ou un deuxième autre appareil de commande (ECU3, VECU3) est raccordé au deuxième réseau (Stack2), dans lequel, dans le deuxième réseau (Stack2), au moyen du premier module logiciel (ECU1') du modèle de simulation, l'appareil de commande à tester (ECU 1, VECU 1) est simulé en tant que partenaire de communication au moins pour le premier autre appareil de commande (ECU2, VECU2), des messages entrants du premier et/ou du deuxième autre appareil de commande (ECU2, VECU2) étant enregistrés dans la file d'attente (Q) via les autres interfaces d'appareil de commande (S2, S3) et étant écrits de là dans le tampon de messages.

3. Procédé selon la revendication 1 ou 2, dans lequel les messages présentent une identification (ID), le tampon de messages étant aménagé sur le simulateur (HIL, S) de telle sorte qu'un tampon de messages dédié est respectivement conservé pour au moins une identification de message prédéterminée, chacun des tampons de messages dédiés étant aménagé pour recevoir un nombre déterminé de messages avec l'identification correspondante.

4. Procédé selon la revendication 3, dans lequel le modèle de simulation présente une simulation de bus résiduel, dans lequel des messages sont simulés dans la simulation de bus résiduel et dans lequel ces messages simulés sont écrits directement dans un tampon d'envoi pour le transfert à l'appareil de commande à tester (ECU1) ou dans lequel des messages simulés avec une identification déterminée sont écrits dans le tampon de messages dédié pour des messages avec l'identification correspondante.

5. Procédé selon l'une quelconque des revendications précédentes, dans lequel le simulateur est agencé pour munir les messages d'une méta-information avant de les enregistrer dans la file d'attente (Q), la méta-information indiquant si le message est un message enregistré provenant de l'unité de lecture (RS).

6. Procédé selon la revendication 5, dans lequel, à partir du début de la lecture des messages enregistrés, lors du transfert de messages de la file d'attente (Q) dans le tampon de messages, les méta-informations des messages sont extraites et, en fonction des méta-informations sur les messages dans la file d'attente (Q), , ceux des messages qui ont été envoyés par le premier autre appareil de commande (ECU2, VECU2) et/ou le deuxième autre appareil de commande (ECU3, VECU3) sont rejetés et seuls les messages enregistrés provenant de l'unité de lecture (RS) sont écrits dans le tampon de messages et transmis au appareil de commande à tester (ECU1) .

7. Procédé selon l'une quelconque des revendications précédentes, dans lequel le transfert des messages du deuxième réseau (Stack2) au premier réseau (Stack1) s'effectue soit par une analyse syntaxique des messages dans le deuxième réseau (Stack2) suivie d'un transfert de paramètres au moyen d'un programme approprié,soit en stockant les messages dans une zone de mémoire commune, notamment dans le tampon de messages, une possibilité d'accès au tampon de messages existant aussi bien depuis le premier réseau (Stack1) que depuis le deuxième réseau (Stack2) et/ou le troisième réseau.

8. Procédé selon l'une quelconque des revendications précédentes, dans lequel les modules logiciels (ECU1 ', ECU2', ECU3', ECU4') simulent des appareils de commande réelles dans la mesure où ils reproduisent les parties de communication d'une appareil de commande (ECU1, ECU2, ECU3), notamment des messages de service ou des messages pour la transmission de signaux.

9. Procédé selon l'une quelconque des revendications précédentes, dans lequel des messages enregistrés, pour lesquels il s'agit de messages de service et plus précisément de messages de réponse (Response-Messages), sont retenus jusqu'à ce qu'un message de demande correspondant (Request-Message) soit reçu de l'appareil de commande à tester (ECU 1) et dans lequel l'en-tête du message de réponse pour le transfert à l'appareil de commande à tester (ECU1, VECU1) est manipulé de telle sorte qu'il soit accepté par l'appareil de commande à tester (ECU 1, VECU1).

10. Procédé selon l'une quelconque des revendications précédentes, dans lequel, dans le simulateur (HIL, S), à la réception de chaque message enregistré par l'unité de lecture (RS), on vérifie s'il s'agit d'un message de découverte de service et, dans le cas d'un message de découverte de service, on vérifie quel est le statut de réception du message pour le service correspondant.

11. Procédé selon l'une quelconque des revendications précédentes, dans lequel, pour chaque message enregistré reçu, son en-tête est vérifié et dans lequel, en présence d'un horodateur, le message enregistré n'est lu que si le temps de simulation dans le simulateur (HIL, S) est supérieur ou égal au temps donné par l'horodateur ou le message enregistré n'est lu que si la différence avec l'horodateur d'un message enregistré reçu précédemment est supérieure ou égale au temps qui s'est écoulé depuis la lecture du message enregistré reçu précédemment.

12. Procédé selon l'une quelconque des revendications précédentes, dans lequel l'unité de lecture (RS) est connectée au troisième réseau par l'intermédiaire de l'interface de lecture (SW, VSW) et le premier autre appareil de commande (ECU2, VECU2) et/ou le deuxième autre appareil de commande (ECU3, VECU3) sont connectés au deuxième réseau (Stack2) par l'intermédiaire de l'autre interface de contrôleur (S2).

13. Simulateur (HIL, S) agencé pour mettre en œuvre le procédé selon l'une quelconque des revendications précédentes.
